# EUROPEAN PATENT SPECIFICATION

(11) **EP 4 124 099 B1**
(45) Date of publication and mention of the grant of the patent: **13.08.2025**
(21) Application number: 20925655.1
(22) Date of filing: 31.03.2020
(51) Int. Cl.: H04W 64/00, H04W 36/32, H04W 36/00, H04W 36/36

(54) **COMMUNICATION METHOD AND COMMUNICATION APPARATUS FOR CONFURING A CONDITIONAL HANDOVER**
KOMMUNIKATIONSVERFAHREN UND KOMMUNIKATIONSVORRICHTUNG ZUR BESTÄTIGUNG EINE BEDINGTE ÜBERGABE
PROCÉDÉ DE COMMUNICATION ET APPAREIL DE COMMUNICATION AFIN DE CONFIGURER UN TRANSFERT CONDITIONNEL

(30) Priority: 18.03.2020 CN 202010192279
(43) Date of publication of application: 25.01.2023
(73) Proprietor: Shenzhen Transsion Holdings Co., Ltd., Shenzhen, Guangdong 518057 (CN)
(72) Inventor: XIA, Xin, Shenzhen, Guangdong 518057 (CN)
(74) Representative: Elzaburu S.L.P.
(86) International application number: PCT/CN2020/082304
(87) International publication number: WO 2021/184419

(56) References cited:
- WO-A1-2019/029015
- WO-A1-2019/029015
- WO-A1-2019/137409
- CN-A- 102 264 093
- CN-A- 106 686 647
- CN-A- 110 035 464
- US-A1- 2019 223 073
- US-A1- 2020 344 654

## Description

### TECHNICAL FIELD

The present application relates to the field of communication technology and, in particular, to a communication method and a communication apparatus.

### BACKGROUND

A conditional handover (CHO for short hereinafter) mechanism is introduced in a 5th generation mobile communication network (that is, 5G) system. The CHO mechanism is different from a traditional handover mechanism. A base station configures a low pre-handover threshold for a user equipment (UE), and it is reported to the base station when UE signal intensity reaches the threshold. The base station decides to perform CHO and informs a neighbor base station of the UE to perform related handover preparations, including resources reservation, etc. The base station will configure another handover performing threshold (a high threshold) for the UE, and send the handover performing threshold and configuration information of an alternative target handover cell to the UE. After the UE receives the handover performing threshold, when finding that measured signal intensity reaches an actual handover threshold, it will perform directly an operation of switching to a target cell instead of a handover only after reporting to the base station and waiting for a decision of the base station.

However, in some scenarios, it will cause a certain amount of resource waste and increase signaling burden by introducing the CHO mechanism. After the CHO mechanism is configured, the UE may always walk on an edge of a cell or return to a center area of the cell, so that an actual handover threshold will not be reached.

Therefore, the actual handover will never happen, and system resources reserved for the UE will be wasted. In addition, using the CHO mechanism requires the UE to report when it reaches the pre-handover threshold. Compared with a traditional method, the UE only reports when it reaches the actual handover threshold, which advances reporting time of a UE measurement report and increases a reporting frequency and a corresponding signaling burden.

Existing communication standards do not specify when to configure the CHO mechanism and when to cancel it. However, it is obvious that improper configuration of the CHO mechanism will lead to increase of a system burden, decrease of handover performance, waste of resources and other adverse consequences. Therefore, a new way to configure the CHO mechanism is needed to avoid adverse consequences caused by improper configuration.

Related technologies are known from WO 2019/137409 A1, US 2019/223073 A1, and WO 2019/029015 A1, the above-mentioned applications all disclose a communication handover method.

### SUMMARY

The invention is set out in the appended set of claims. Embodiments of the present application disclose a communication method and a communication apparatus, which can configure and use a conditional handover mechanism and reduce a handover failure rate and a handover delay.

In a first aspect, an embodiment of the present application provides a communication method, including: sending, by a terminal device, a measurement report in the case that a first trigger condition and/or a second trigger condition are satisfied; where the measurement report is used for a first network device to determine to perform a CHO or not to perform the CHO, the first trigger condition is a signal condition that is required to be satisfied for the terminal device to send the measurement report, and the second trigger condition is a speed condition that is required to be satisfied for the terminal device to send the measurement report.

It should be noted that a handover between the first network and a second network can be a handover across different base stations, or can be a handover between different sectors/cells of a same base station, as well as a handover between different cells/cell groups under multiple connectivity/dual connectivity architectures. These all belong to the scope of the present invention, and will not be repeated.

According to the study, in a scenario with a low UE speed, there is almost no performance improvement when using a CHO mechanism. On the contrary, an extra advance preparation work increases unnecessary waste of resources and burdens on the UE to send a measurement report. For some specific scenarios, when the UE keeps a constant motion state at a certain rate, such as highway, train and other access scenarios, the probability of the handover of the UE is very high. It is significant to reduce a handover delay and increase a success rate by configuring handover resources in advance through the CHO and by autonomously performing a handover condition through the UE to. It can be concluded that: (1) for the UE with a high movement speed, it is beneficial to configure the CHO; (2) for the UE with a low movement speed, CHO configuration should be reduced as far as possible, which is beneficial to reduce unnecessary waste of system resources; and (3) for some specific scenarios, such as UE maintaining a high rate of continuous motion state, it is necessary and beneficial to configure the CHO. The terminal device sends its motion state information to the first network device, the first network device can determine the motion state of the terminal device according to the motion state information, and then determine whether to perform the CHO according to the motion state of the terminal device. Exemplarily, the first network device performs the CHO when the speed of the terminal device exceeds a certain speed threshold, otherwise, not performs the CHO.

In the embodiment of the present application, the terminal device sends a measurement report to the first network device when a first trigger condition and/or a second trigger condition are satisfied. A conditional handover mechanism can be configured and used more reasonably, and a handover failure rate and a handover delay are reduced.

In an implementation, the second trigger condition includes at least one of the following: an instantaneous speed of the terminal device exceeds a first speed threshold, an average speed of the terminal device exceeds a second speed threshold, and the terminal device does not obtain a current speed of the terminal device.

The terminal device does not obtain the current speed of the terminal device can be any one of the following cases: 1, the terminal device does not try to acquire a current speed; 2, the terminal device tries to acquire the current speed, but does not get the current speed; and 3, the terminal device acquires the current speed, but the current speed is invalid (beyond a normal range), etc.

In an optional implementation, the first trigger condition includes at least one measurement event defined by the 3rd generation partnership project (3GPP) radio resource control protocol (RRC). A main principle in an embodiment of the present application is that the terminal device sends a measurement report to the first network device when simultaneously satisfying measurement events A3, A5 and the second trigger condition defined in the 3GPP 38.331 RRC protocol. It should be understood that the first trigger condition can be a trigger condition required to be satisfied for sending the measurement report to the first network device defined in the 3GPP 38.331 RRC protocol, or conditions defined based on other measurement events, which will not be described in detail here.

In an optional implementation, the method further includes: receiving, by the terminal device, measurement configuration information from the first network device; where the measurement configuration information includes at least one of the first speed threshold and the second speed threshold.

In an optional implementation, the receiving, by the terminal device, the measurement configuration information from the first network device includes: receiving, by the terminal device, the measurement configuration information sent by the first network device through a broadcast message or a radio resource control (RRC) signaling, where the measurement configuration information includes at least one of the first speed threshold and the second speed threshold.

In an optional implementation, after sending the measurement report to the first network device, the method further includes:
receiving, by the terminal device, conditional handover configuration information from the first network device; where the conditional handover configuration information is used configure an execution condition for the terminal device to perform a conditional handover and/or configuration information required for performing the conditional handover.

In a second aspect, an embodiment of the present application provides another communication method, the method includes: sending, by a first network device, measurement configuration information; where the measurement configuration information is used to configure a trigger condition for a terminal device to send a measurement report to the first network device, the measurement configuration information includes at least one speed threshold and/or at least one signal strength threshold, and the measurement report is used for the first network device to determine to perform a CHO or not to perform the CHO.

In the embodiment of the present application, through sending the measurement configuration information to the terminal device, so that the terminal device sends the measurement report to the first network device in the case that its own speed and signal strength meet the requirement, thereby realizing the CHO.

In an implementation, the measurement configuration information is used to configure a first trigger condition and/or a second trigger condition that are required to be satisfied for the terminal device to send a measurement report to the first network device, the first trigger condition is a signal condition that is required to be satisfied for the terminal device to send the measurement report, and the second trigger condition is a speed condition that is required to be satisfied for the terminal device to send the measurement report.

In an implementation, the second trigger condition includes at least one of the following: an instantaneous speed of the terminal device exceeds a first speed threshold, an average speed of the terminal device exceeds a second speed threshold, and the terminal device does not obtain a current speed of the terminal device.

In an optional implementation, the first trigger condition includes at least one measurement event defined by the radio resource control protocol (RRC).

In an optional implementation, the measurement configuration information includes at least one of the first speed threshold and the second speed threshold.

In an optional implementation, the method further includes: sending, by the first network device, the measurement configuration information to the terminal device through a broadcast message or a radio resource control (RRC) signaling, where the measurement configuration information includes at least one of the first speed threshold and the second speed threshold.

In an optional implementation, after the first network device sends the measurement configuration information to the terminal device, the method further includes: sending, by the first network device, conditional handover configuration information to the terminal device; where the conditional handover configuration information is used configure an execution condition for the terminal device to perform a conditional handover and/or configuration information required for performing the conditional handover.

In an optional implementation, measurement configuration information sent by the first network device to different terminal devices are different.

In a third aspect, an example provides yet another communication method, the method includes: sending, by a terminal device, a measurement report and motion state information of the terminal device; where the measurement report and the motion state information are used for a first network device to determine to perform a CHO or not to perform the CHO.

In the example, the terminal device sends the measurement report and the motion state information of the terminal device to the first network device, so that the first network device can more reasonably configure and use the conditional handover mechanism, thereby reducing a handover failure rate and a handover delay.

In an optional implementation, the sending, by the terminal device, the measurement report and the motion state information of the terminal device to the first network device includes: sending, by the terminal device, the measurement report and the motion state information to the first network device in the case of satisfying a first trigger condition; where the first trigger condition includes at least one measurement event defined by a radio resource control (RRC) protocol.

In an optional implementation, the motion state information includes at least one of an instantaneous speed of the terminal device, an average speed of the terminal device, speed indication information, and motion state indication information; and the speed indication information is used to indicate a speed of the terminal device, and the motion state indication information is used to indicate a motion state of the terminal device.

In an optional implementation, after the terminal device sends the measurement report and the motion state information of the terminal device to the first network device, the method further includes: receiving, by the terminal device, conditional handover configuration information from the first network device; where the conditional handover configuration information is used configure an execution condition for the terminal device to perform a conditional handover and/or configuration information required for performing the conditional handover.

In a fourth aspect, an example provides another communication method, the method includes: receiving, by a first network device, a measurement report from a terminal device and motion state information of the terminal device; and determining, by the first network device, to perform a CHO or not to perform the CHO according to the measurement report and the motion state information.

In an optional implementation, the motion state information includes at least one of an instantaneous speed of the terminal device, an average speed of the terminal device, speed indication information, and motion state indication information; and the speed indication information is used to indicate a speed of the terminal device, and the motion state indication information is used to indicate a motion state of the terminal device.

In an optional implementation, after the first network device determines to perform the CHO according to the measurement report and the motion state information, the method further includes: sending, by the first network device, conditional handover configuration information to the terminal device; where the conditional handover configuration information is used configure an execution condition for the terminal device to perform a conditional handover and/or configuration information required for performing the conditional handover.

In a fifth aspect, an embodiment of the present application provides a communication apparatus, including: a determining unit, configured to determine a case that a first trigger condition and/or a second trigger condition are satisfied; a sending unit, configured to send a measurement report to a first network device; where the measurement report is used for the first network device to determine to perform a CHO or not to perform the CHO, and the first trigger condition includes at least one measurement event defined by the 3GPP radio resource control protocol (RRC).

In an implementation, the second trigger conditions includes at least one the following: an instantaneous speed of the terminal device exceeds a first speed threshold, an average speed of the terminal device exceeds a second speed threshold, and the terminal device does not obtain a current speed of the terminal device.

In an optional implementation, the communication apparatus further includes: a receiving unit, configured to receive measurement configuration information of from a first network device; and the measurement configuration information includes at least one of the first speed threshold and the second speed threshold.

In a sixth aspect, an embodiment of the present application provides a communication apparatus, including: configured to send measurement configuration information to a terminal device; where the measurement configuration information is used to configure a trigger condition for the terminal device to send a measurement report to a first network device, the measurement configuration information includes at least one speed threshold and/or at least one signal strength threshold, and the measurement report is used for the first network device to determine to perform a CHO or not to perform the CHO.

In an implementation, the measurement configuration information is used to configure a first trigger condition and/or a second trigger condition that are required to be satisfied for the terminal device to send a measurement report to the first network device, the first trigger condition is a signal condition that is required to be satisfied for the terminal device to send the measurement report, and the second trigger condition is a speed condition that is required to be satisfied for the terminal device to send the measurement report.

In an implementation, the second trigger conditions includes at least one of the following: an instantaneous speed of the terminal device exceeds a first speed threshold, an average speed of the terminal device exceeds a second speed threshold, and the terminal device does not obtain a current speed of the terminal device.

In a seventh aspect, an example provides another communication apparatus, including: a sending unit, configured to send a measurement report and motion state information of a terminal device to a first network device; where the measurement report and the motion state information are used for the first network device to determine to perform a CHO or not to perform the CHO.

In an optional implementation, the sending unit is specifically used to send the measurement report and the motion state information to the first network device in the case of satisfying a first trigger condition; where the first trigger condition includes at least one measurement event defined by a radio resource control protocol (RRC).

In an optional implementation, the motion state information includes at least one of an instantaneous speed of the terminal device, an average speed of the terminal device, speed indication information, and motion state indication information; and the speed indication information is used to indicate a speed of the terminal device, and the motion state indication information is used to indicate a motion state of the terminal device.

In an eighth aspect, an example provides another communication apparatus, including: a receiving unit, configured to receive a measurement report and motion state information of a terminal device from the terminal device; and a determining unit, configured to determine to perform a CHO or not to perform the CHO according the measurement report and the motion state information.

In an optional implementation, the motion state information includes at least one of an instantaneous speed of the terminal device, an average speed of the terminal device, speed indication information, and motion state indication information; and the speed indication information is used to indicate a speed of the terminal device, and the motion state indication information is used to indicate a motion state of the terminal device.

In a ninth aspect, an embodiment of the present application provides a communication apparatus including: a processor and an interface circuit, where the interface circuit is configured to receive code instructions and transmit to the processor; and the processor runs the code instructions to execute the method according to any one of the first aspect and the second aspect above.

In a tenth aspect, an example provides a communication apparatus including: a processor and an interface circuit, where the interface circuit is configured to receive code instructions and transmit to the processor; and the processor runs the code instructions to execute the method according to any one of the third aspect and the fourth aspect above.

In a eleventh aspect, an embodiment of the present application provides a communication system including: a network device and a terminal device, where the terminal device can be used to perform the method according to any one of the first aspect, and the network device can be used to perform the method according to any one of the second aspect.

In a twelfth aspect, an example provides a communication system including: a network device and a terminal device, where the terminal can be used to perform the method according to any one of the third aspect, and the network device can be used to perform the method according to any one of the fourth aspect.

In a thirteenth aspect, an embodiment of the application provides a readable storage medium for storing instructions, and when the instructions are executed, the method according to any one of the first aspect and the second aspect above is enabled to be realized.

In a fourteenth aspect, an example provides a readable storage medium for storing instructions, and when the instructions are executed, the method according to any one of the third aspect and the fourth aspect above is enabled to be realized.

In a fifteenth aspect, an embodiment of the present application provides a computer program product including instructions, when the instructions are executed, the method according to any one of the first aspect and the second aspect above is enabled to be realized.

In a sixteenth aspect, an example provides a computer program product including instructions, when the instructions are executed, the method according to any one of the third aspect and the fourth aspect above is enabled to be realized.

### BRIEF DESCRIPTION OF DRAWINGS

In order to illustrate the technical solutions of the embodiments of the present application or in the background more clearly, the following will describe the drawings required in the embodiments of the present application or the background.
FIG. 1 is a schematic diagram of a network architecture disclosed by an embodiment of the present application;
FIG. 2 is a flow chart of a conditional handover interaction provided by an example;
FIG. 3 is a flow chart of a communication method provided by an embodiment of the present application;
FIG. 4 is a flow chart of another communication method provided by an embodiment of the present application;
FIG. 5 is a flow chart of another communication method provided by an embodiment of the present application;
FIG. 6 is a flow chart of another communication method provided by an example;
FIG. 7 is a flow chart of another communication method provided by an example;
FIG. 8 is a flow chart of another communication method provided by an example;
FIG. 9 is a schematic structural diagram of a communication apparatus provided by an embodiment of the present application;
FIG. 10 is a schematic structural diagram of another communication apparatus provided by an embodiment of the present application;
FIG. 11 is a schematic structural diagram of another communication apparatus provided by an example;
FIG. 12 is a schematic structural diagram of another communication apparatus provided by an example;
FIG. 13 is a schematic structural diagram of another communication apparatus provided by an embodiment of the present application; and
FIG. 14 is a schematic structural diagram of another communication apparatus provided by an embodiment of the present application.

### DESCRIPTION OF EMBODIMENTS

The terms "first", "second", and "third" in the embodiments of the specification, claims and the above drawings of the present application are used to distinguish similar objects, and are not necessarily used to describe a specific sequence or order. In addition, the terms "include" and "comprise" and any other variants thereof are intended to cover non-exclusive inclusion, for example, including a series of steps or units. A method, a system, a product, or a device is not necessarily limited to those clearly listed steps or units, but may include other steps or units that are not clearly listed or are inherent to these processes, methods, products, or devices. "And/or" is used to indicate one or both of two connected objects are selected. For example, "A and/or B" means A, B or A and B.

An embodiment of the present application discloses a communication method and a communication apparatus, combining a motion state of a terminal device and a signal strength of a current cell (corresponding to a first network device) and/or a signal strength of a neighboring cell (corresponding to a second network device) received by the terminal device, to determine whether to perform a conditional handover. A conditional handover mechanism can be configured and used more reasonably, and a handover failure rate and a handover delay are reduced. In order to better understand the communication method and the communication apparatus disclosed in the embodiments of the present application, the following first describes a network architecture to which the embodiments of the present application are applicable. The method disclosed in the embodiments of the present application can be applied to 5G new radio access technology (New RAT, NR) system; and can also be applied to other communication systems. The following first introduces a network architecture applicable to a method disclosed by an embodiment of the present application.

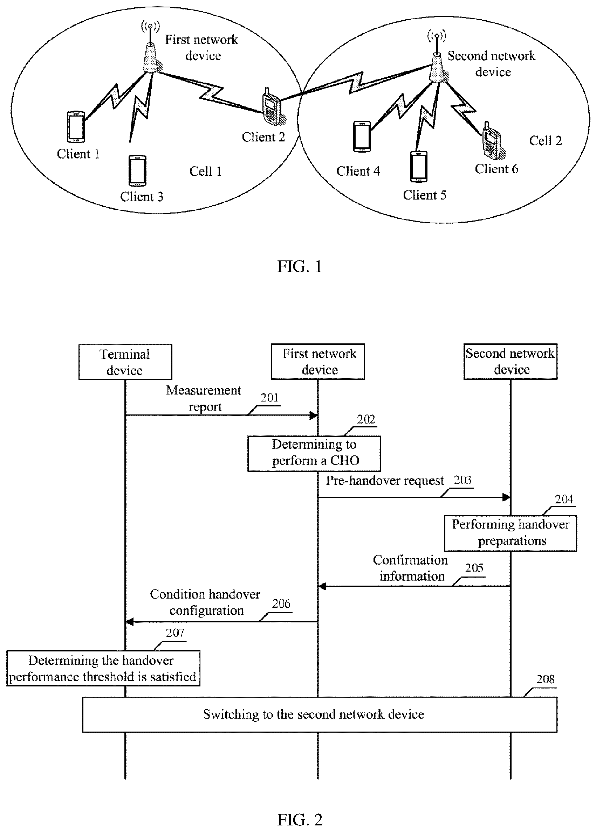

Please refer to FIG. 1. FIG. 1 is a schematic diagram of a network architecture disclosed by an embodiment of the present application. As shown in FIG. 1, the network architecture is apply to a scenario of a cell handover, that is, a scenario of switching from a cell currently accessed to another cell through a terminal device. A network device is an entity on a network side that is used to transmit or receive signals, such as a next generation Nodeb (gNB). The terminal device is an entity on a user side that is used to receive or transmit signals, such as a mobile phone. Since there are many application scenarios for base stations and UEs, in the following, the base station is taken as an example of the network device, and a user equipment (UE) is taken as an example of the terminal device. As shown in FIG. 1, the network architecture includes a cell 1 (corresponding to the first network device) and a cell 2 (corresponding to the second network device). The UEs accessed in the cell 1 include UE1, UE2 and UE3, and the UEs accessed in the cell 2 include UE4, UE5, and UE6. In a communication system, when a UE moves from one cell to another, it needs to switch to a new cell. In FIG. 1, the UE2 is located at an edge of the cell 1. When the UE2 receives a stronger signal from the cell 1 than that receives from the cell 2, the UE can switch from the cell 1 to the cell 2, that is, be accessed to the cell 2. It can be understood that for one UE, when satisfying the cell handover condition, it can switch from the cell currently accessed to another cell.

A 5G system newly introduce a CHO mechanism. In some examples, the UE is configured with a relatively low pre-handover threshold (a low threshold) by the base station, when the signal strength of the UE reaches the threshold, it reports to the base station; and the base station determines to perform the CHO and inform the UE's neighbor base stations to perform related handover preparations, including resources reservation, etc. The base station will configure another handover performing threshold (a high threshold) for the UE, and send the handover performing threshold and configuration information of candidate target handover cells to the UE. After the UE receives the handover performing threshold, when founding that a measured signal strength reaches the handover performing threshold, the UE will directly perform an operation of the handover to a target cell, without reporting to the base station and waiting for the decision of the base station before the handover. The following describes a main flow of a conditional handover mechanism.

FIG. 2 is a flow chart of a conditional handover interaction provided by an example. As shown in FIG. 2, the method may include:
201, a terminal device sends a measurement report to a first network device.

The first network device determines to perform a CHO or not to perform the CHO according to the measurement report. Optionally, the terminal device sends the measurement report to the first network device after detecting that a signal strength from the first network device is lower than a pre-handover threshold. Optionally, after detecting that a signal strength from a second network device is higher than the pre-handover threshold, the terminal device sends a measurement report to the first network device. The terminal device may be mobile phones and other devices that can communicate through base stations and other network devices, the first network device may be a network device corresponding to a cell accessed by the terminal device, and the second network device may be a network device corresponding to a cell adjacent to the cell accessed by the terminal device. For example, the first network device and the second network device are two adjacent base stations.

202, the first network device determines to perform a CHO according to the measurement report.

203, the first network device sends a pre-handover request to the second network device.

The pre-handover request is used to inform the second network device (corresponding to a neighbor base station of the terminal device) to perform related handover preparations including resources reservation.

204, the second network device performs handover preparations.

205, the second network device sends confirmation information to the first network device.

The confirmation information indicates that the second network device has completed the handover preparations.

206, the first network device sends conditional handover configuration information to the terminal device.

The conditional handover configuration information includes a handover performing threshold and configuration information of the second network device (that is, a candidate target handover cell). The handover performing threshold may be a signal strength threshold.

207, the terminal device switches to the second network device in the case that it detects that a signal satisfies the handover performing threshold.

The switching to the second network device can be understood as the terminal device switches from a cell currently accessed to another cell. The terminal device and the second network device can perform operations such as synchronization and random access to complete a cell handover.

In the example, the terminal device sends the measurement report to the first network device when the pre-handover threshold is satisfied by using the CHO mechanism, so that the first network device informs the second network device to perform handover preparations, and when satisfying the handover performing threshold, the terminal device switches directly to the second network device without informing the first network device; thereby reducing a handover failure rate, and reducing a handover delay to a certain extent.

However, in some scenarios, the introduction of the CHO mechanism will cause a certain waste of resources and increase the signaling burdens. After the CHO mechanism is configured, the UE may always walk on the edge of the cell or return to a center of the cell, causing not reaching the actual handover threshold. Therefore, the actual handover will never occur, such that the system resources reserved for the UE will be wasted. In addition, it is necessary to report when the UE reaches the pre-handover threshold by using the CHO mechanism. Compared with the traditional method, it only reports when the actual handover threshold is reached, which advances the time of reporting the UE measurement report, and increases the frequency of reporting and corresponding signaling burden.

The existing communication criterions do not specify under what circumstances the CHO mechanism is configured and under what circumstances the configuration of the CHO mechanism is cancelled. However, it is obvious that improper configuration of the CHO mechanism will cause adverse consequences such as increased system burdens, decreased handover performances, and waste of resources. Therefore, a new method of configuring the CHO mechanism is needed to avoid the adverse consequences caused by an improper configuration. In the following, description will be made to introduce a communication method provided by an embodiment of the present application that can more reasonably apply the CHO.

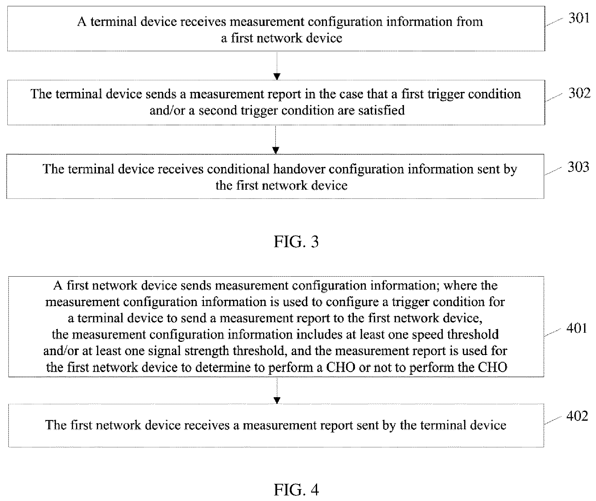

FIG. 3 is a flow chart of a communication method provided by an embodiment of the present application. As shown in FIG. 3, the method may include:
301, a terminal device receives measurement configuration information from a first network device.

The measurement configuration information is used to configure a trigger condition for the terminal device to send a measurement report to the first network device, and the measurement configuration information includes at least one speed threshold and/or at least one signal strength threshold. Optionally, the measurement configuration information includes at least one of a first threshold and a second threshold, and at least one of a first speed threshold and a second speed threshold. Optionally, the first threshold and the second threshold are both a signal strength threshold, and the first threshold or the second threshold may correspond to a pre-handover threshold in FIG. 2. Optionally, the terminal device configures a first trigger condition and/or a second trigger condition according to the measurement configuration information.

The method includes:
302, the terminal device sends a measurement report in the case that a first trigger condition and a second trigger condition are satisfied.

Alternatively, in an example, the step 302 of the method may be: the terminal device sends a measurement report in the case that a first trigger condition or a second trigger condition are satisfied.

The measurement report is used for the first network device to determine to perform the CHO or not to perform the CHO. The first trigger condition includes at least one measurement event defined by the radio resource control protocol (RRC), and may further include other measurement events, which is not limited in the present application. In an implementation, the first trigger condition includes that the terminal device detects that the signal strength from the first network device is less than the first threshold, and/or the terminal device detects that the signal strength from the second network device is not less than the second threshold. The first value may be -120 dBm, -100 dBm, -90 dBm, -80 dBm, -75 dBm, etc., and the second threshold may be -80 dBm, -75 dBm, -70 dBm, -60 dBm, etc. The second trigger condition includes at least one of the following: the instantaneous speed of the terminal device exceeds the first speed threshold, the average speed of the terminal device exceeds the second speed threshold, and the terminal device does not obtain its current motion speed. The first speed threshold can be 10 kilometers per hour, 15 kilometers per hour, 30 kilometers per hour, 45 kilometers per hour, etc., and the second speed threshold can be 10 kilometers per hour, 15 kilometers per hour, 30 kilometers per hour, 45 kilometers per hour, etc., which is not limited in the present application. The terminal device does not obtain its current speed can be any one of the following cases: 1, the terminal device does not try to acquire a current speed; 2, the terminal device tries to acquire the current speed, but does not acquire the current speed; and 3, the terminal device acquires the current speed, but the current speed is invalid (beyond a normal range), etc. In some embodiments, the terminal device sends the measurement report to the first network device in the case that the first trigger condition is satisfied and its speed is higher than the speed threshold (corresponding to the first speed threshold or the second speed threshold). In some embodiments, the terminal device is a mobile phone, the first network device is a base station corresponding to a cell currently accessed by the terminal device, and the second network device is a base station corresponding to a cell adjacent to the cell.

Optionally, the measurement report includes the signal strength from the first network device detected by the terminal device, and/or the signal strength from the second network device detected by the terminal device. In some embodiments, the first trigger condition is that the terminal device detects that the signal strength from the first network device is less than the first threshold; before performing step 302, the terminal device may detect the signal strength from the first network device, and then determine whether the first trigger condition is satisfied. In some embodiments, the terminal device detects that the signal strength from the second network device is not less than the second threshold; and before performing step 302, the terminal device may detect the signal strength from the second network device, and then determine whether the first trigger condition is satisfied. In actual applications, the terminal device can acquire speed information through the global navigation satellite system (GNSS), such as the Beidou satellite navigation system; and can also obtain its speed through the measurement of speed sensors, acceleration sensors, etc. In an embodiment, after determining that the first trigger condition is satisfied, the terminal device determines whether the second trigger condition is satisfied according to the motion state of the terminal device.

The method may include:
303, the terminal device receives conditional handover configuration information sent by the first network device.

The conditional handover configuration information is used to configure conditions for the terminal device to handover to the second network device and/or information required for the terminal device to handover to the second network device. Exemplarily, the conditional handover configuration information includes a handover performing threshold (that is, the condition for the terminal device to handover to the second network device) and the configuration information(corresponding to information required by the terminal device for switching to the second network device) of the second network device (that is, a candidate target handover cell).

In the embodiment of the present application, when satisfying the first trigger condition and the second trigger condition, the terminal device sends the measurement report to the first network device. Alternatively, in an example, when satisfying the first trigger condition or the second trigger condition, the terminal device may send the measurement report to the first network device. A conditional handover mechanism can be configured and used more reasonably, and a handover failure rate and a handover delay are reduced.

FIG. 3 illustrates a method flow performed by a terminal device (that is, a terminal side), and in the following a method flow performed by a first network device (that is, a network side) is described.

FIG. 4 is a flowchart of another communication method provided by an embodiment of the present application. As shown in FIG. 4, the method includes:
401. a first network device sends measurement configuration information;
where the measurement configuration information is used to configure a trigger condition for a terminal device to send a measurement report to the first network device, the measurement configuration information includes at least one speed threshold and at least one signal strength threshold. Alternatively, in an example, the measurement configuration information includes at least one speed threshold or at least one signal strength threshold. The measurement report is used for the first network device to determine to perform a CHO or not to perform the CHO.

The measurement configuration information is used to configure a first trigger condition and a second trigger condition that need to be satisfied when the terminal device sends the measurement report to the first network device. Alternatively, in an example, the measurement configuration information is used to configure a first trigger condition or a second trigger condition that need to be satisfied when the terminal device sends the measurement report to the first network device. The first trigger condition includes at least one measurement event defined by the 3GPP RRC, and may further include other measurement events, which is not limited in the present application. Exemplarily, the first trigger condition includes that the terminal device detects that the signal strength from the first network device is less than a first threshold, and/or, the terminal device detects that the signal strength from the second network device is not less than a second threshold. The second trigger condition includes that an instantaneous speed of the terminal device exceeds the first speed threshold and/or an average speed of the terminal device exceeds the second speed threshold, the at least one speed threshold includes the first speed threshold and/or the second speed threshold, and the at least one signal strength threshold includes the first threshold and/or the second threshold.

402, the first network device receives a measurement report sent by the terminal device.

The measurement report is used for the first network device to determine whether to perform the CHO. Step 402 is optional, not necessary.

In the embodiment of the present application, the measurement configuration information is sent to the terminal device so that the terminal device can send a measurement report to the first network device in the case that its own speed and signal strength satisfy the requirements, thereby implementing the CHO.

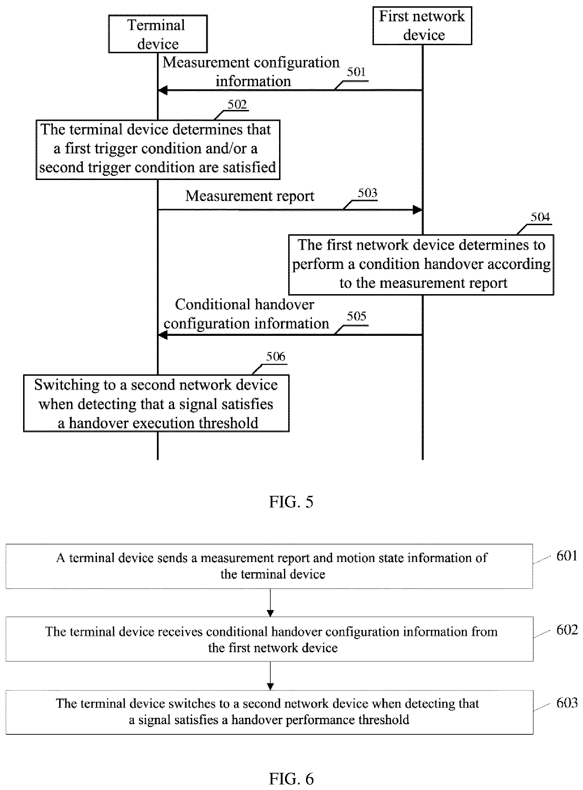

FIG. 3 and FIG. 4 describe a communication method flow for implementing the CHO from a terminal side and a network side, respectively. The following describes an interaction flow for implementing the CHO between the terminal side and the network side. FIG. 5 is a flow chart of another communication method provided by an embodiment of the present application. As shown in FIG. 5, the method includes:
501, a first network device sends measurement configuration information. The measurement configuration information is used to configure a trigger condition for a terminal device to send a measurement report to the first network device, the measurement configuration information includes at least one speed threshold and at least one signal strength threshold, and the measurement report is used for the first network device to determine to perform the CHO or not to perform the CHO. Optionally, step 501 may be replaced by: the first network device sends the measurement configuration information and at least one speed threshold to the terminal device; where the measurement configuration information is used to configure a trigger condition for the terminal device to send a measurement report to the first network device, and the measurement configuration information includes at least one signal strength threshold. That is to say, the first network device can respectively send the measurement configuration information and a speed threshold (also called the speed threshold). Exemplarily, the first network device respectively sends the speed threshold through a system broadcast message, a radio resource control (RRC), etc. Exemplarily, the first network device sends the speed threshold and the measurement configuration information to the terminal device in a way such as simultaneous delivery. In some embodiments, the first network device sends a same speed threshold to each terminal device in its corresponding cell, that is, the speed threshold configured for each terminal device is the same. In some embodiments, the first network device sends different speed thresholds for each terminal device in its corresponding cell, that is, the speed thresholds configured for different terminal devices may be different.

502, the terminal device determines that a first trigger condition and a second trigger condition are satisfied.

503, the terminal device sends a measurement report to the first network device.

It should be understood that the terminal device sends the measurement report to the first network device after its current speed (corresponding to the second trigger condition) and the detected signal strength (corresponding to the first trigger condition) simultaneously satisfy the requirement for conditional handover. That is to say, when the terminal device satisfies the first trigger condition and the second trigger condition, it can trigger an operation of sending the measurement report to the first network device.

504, the first network device determines to perform the conditional handover according to the measurement report.

The implementation of step 504 may be similar to step 202 in FIG. 2.

505, the terminal device receives conditional handover configuration information from the first network device.

The conditional handover configuration information includes a handover performing threshold and configuration information of the second network device (that is, a candidate target handover cell).

506, switiching to a second network device in the case that it is detected that the signal satisfies the handover performing threshold.

It should be understood that if the first network device determines to perform the CHO, the first network device, the second network device, and the terminal device can perform the handover process in FIG. 2 to implement a cell handover, that is, a handover from the first network device to the second network device.

In the embodiment of the present application, for the terminal device sending the measurement report to the first network device, it not only needs to satisfy a certain signal strength condition, but also needs to satisfy a certain condition for its own motion state, which can reduce transmission of the measurement report and save signaling resources.

The main principle of the foregoing embodiment is to further limit the trigger condition that needs to be satisfied for the terminal device to send the measurement report to the first network device, for example, a second trigger condition is added. An example further provides another communication method that can apply the CHO more reasonably. A main principle of the communication method is: the terminal device sends the measurement report and its own motion state information to the first network device, and the first network device determines whether to perform the CHO according to the measurement report and the motion state information. In the following, the flow of the communication method will be described in detail with reference to the drawings.

FIG. 6 is a flow chart of another communication method provided by an example. As shown in FIG. 6, the method may include:
601, a terminal device sends a measurement report and motion state information of the terminal device.

The measurement report and the motion state information are used by the first network device to determine to perform a CHO or not to perform the CHO. Optionally, the motion state information is sent by the terminal device through a radio resource control (RRC) signaling or a control element (CE) of a media access control (MAC) layer.

Optionally, when satisfying the first trigger condition, the terminal device sends the measurement report and the motion state information to the first network device; and the first trigger condition includes at least one measurement event defined by the 3GPP RRC. Optionally, the motion state information includes at least one of an instantaneous speed of the terminal device, an average speed of the terminal device, and speed indication information; and the speed indication information is used to indicate a motion state of the terminal device.

602, the terminal device receives conditional handover configuration information from the first network device.

The conditional handover configuration information includes the handover performing threshold and configuration information of the second network device (that is, a candidate target handover cell). Step 602 may correspond to step 206 in FIG. 2.

603, the terminal device switches to the second network device when detecting that a signal satisfies a handover performing threshold.

Step 602 and step 603 are optional, but not necessary. In some examples, the first network device determines not to perform the CHO according to the measurement report and the motion state information of the terminal device; when the first network device determines not to perform the CHO, the first network device does not send the conditional handover configuration information to the terminal device. In these examples, the terminal device will not perform step 602 and step 603.

In the example, the terminal device sends the measurement report and the motion state information of the terminal device to the first network device, so that the first network device can configure and use the conditional handover mechanism more reasonably, thereby reducing a handover failure rate and a handover delay.

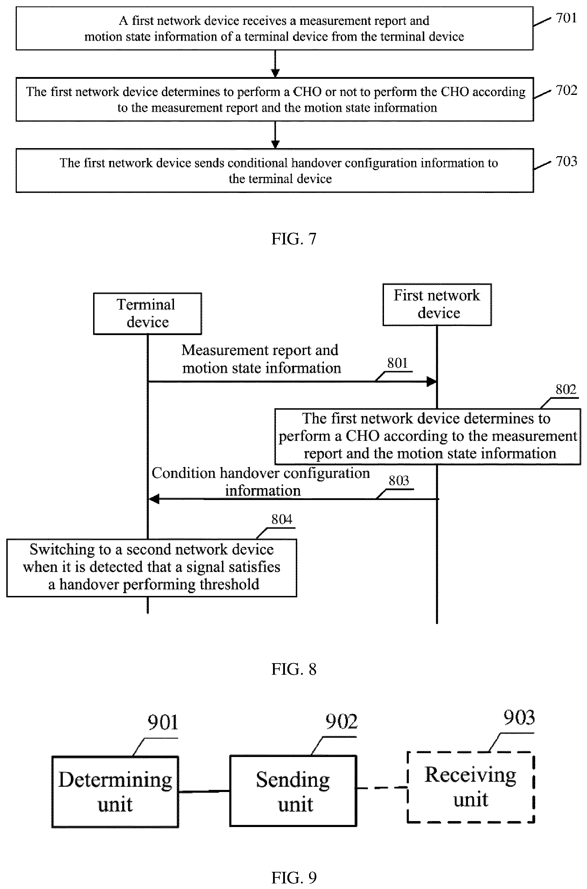

FIG. 7 illustrates a method flow performed by a terminal device (that is, the terminal side), and the following describes the method flow performed by a first network device (that is, the network side).

FIG. 7 is a flowchart of another communication method provided by an example. As shown in FIG. 7, the method may include:
701, a first network device receives a measurement report and motion state information of a terminal device from the terminal device.

Optionally, the motion state information includes at least one of an instantaneous speed of the terminal device, an average speed of the terminal device, and speed indication information; and the speed indication information is used to indicate a motion state of the terminal device.

The motion state information can be one or all of a current instantaneous speed of the terminal device and an average speed of the terminal device in the past period of time (for example, 1 hour, 10 minutes, etc.); it can also be an indication of a current speed state of the terminal device, which indicates that its motion state is in one of several preset speed gears (such as a high grade, a medium grade, and a low grade, or multi-grade classification); and it can also be that the terminal device is currently in an indication of a "continuous motion state with a certain high rate". The first network device can better understand the motion state of the terminal device according to the instantaneous speed and the average speed reported by the terminal device. For example, if the current speed and the average speed of the terminal device are both high, it means that the terminal device is in a "continuous high-speed motion state", and in this case, the terminal device has a very high probability for a handover and a continuous handover, and the first network device can configure the CHO for the terminal device. Optionally, the terminal device may determine whether it is in a "continuous motion state with a certain high rate" according to comprehensive statistical information of its speed, and send an indication to the first network device. In the example, the motion state information may further include other information indicating the motion state of the terminal device, which is not limited in the present application.

702, the first network device determines to perform a CHO or not to perform the CHO according to the measurement report and the motion state information.

Optionally, the first network device determines to perform the CHO when determining that the terminal device is in a high-speed motion state according to the motion state information. For example, the first network device determines that the average speed of the terminal device is greater than 120 kilometers per hour according to the motion state information of the terminal device, and determines to perform the CHO. It should be understood that the first network device may also use other ways to determine whether to perform the CHO according to the motion state information and measurement report of the terminal device, which is not limited in the present application.

703, the first network device sends conditional handover configuration information to the terminal device.

The conditional handover configuration information includes the handover performing threshold and configuration information of the second network device (that is, a candidate target handover cell).

In the example, the first network device can configure and use the conditional handover mechanism more reasonably according to the measurement report sent by the terminal device and the motion state information of the terminal device, thereby reducing a handover failure rate and a handover delay.

FIG. 6 and FIG. 7 describe the communication method flow achieving the CHO from the terminal side and the network side, respectively. The following describes an interaction process flow for implementing the CHO between the terminal side and the network side. FIG. 8 is a flow chart of another communication method provided by an example. As shown in FIG. 8, the method may include:
801, a terminal device sends a measurement report and motion state information of the terminal device.

Optionally, before the terminal device performs step 801, the first network device may send measurement configuration information to the terminal device, and the measurement configuration information is used to configure a trigger condition for the terminal device to send the measurement report and the motion state information to the first network device.

802, the first network device determines to perform a CHO or not to perform the CHO according to the measurement report and the motion state information.

803, the terminal device receives conditional handover configuration information from the first network device.

The conditional handover configuration information includes a handover performing threshold and configuration information of the second network device (that is, a candidate target handover cell).

804, switching to a second network device in the case that it is detected that the signal satisfies the handover performing threshold.

It should be understood that if the first network device determines to perform the CHO, the first network device, the second network device, and the terminal device can perform the handover process in FIG. 2 to implement a cell handover, that is, a handover from the first network device to the second network device.

FIG. 9 is a schematic structural diagram of a communication apparatus provided by an embodiment of the present application. As shown in FIG. 9, the communication apparatus includes:
a determining unit 901, configured to determine a case that a first trigger condition and a second trigger condition are satisfied; and
a sending unit 902, configured to send a measurement report; where the measurement report is used for the first network device to determine to perform a CHO or not to perform the CHO, the first trigger condition is a signal condition that is required to be satisfied when the terminal device sends the measurement report; and the second trigger condition is a speed condition that is required to be satisfied when the terminal device sends the measurement report.

In an implementation, the second trigger condition includes at least one of the following: an instantaneous speed of the terminal device exceeds a first speed threshold, an average speed of the terminal device exceeds a second speed threshold, and the terminal device does not obtain a current speed of the terminal device.

In an optional implementation, the first trigger condition includes at least one measurement event defined by the radio resource control protocol (RRC).

In an optional implementation, the apparatus further includes:
a receiving unit 903, configured to receive measurement configuration information from the first network device; where the measurement configuration information includes at least one of the first threshold and the second threshold, and at least one of the first speed threshold and the second threshold.

In an optional implementation, the receiving unit 903 is configured to receive first measurement configuration information from the first network device; where the first measurement configuration information includes at least one of the first threshold and the second threshold.

In an optional implementation, the receiving unit 903 is further configured to receive measurement configuration information sent by the first network device through a broadcast message or a radio resource control (RRC) signaling, where the measurement configuration information includes at least one of the first speed threshold and the second speed threshold.

In an optional implementation, the receiving unit 903 is further configured to receive conditional handover configuration information from the first network device; where the conditional handover configuration information is used configure an execution condition for the terminal device to perform a conditional handover and/or configuration information required for performing the conditional handover.

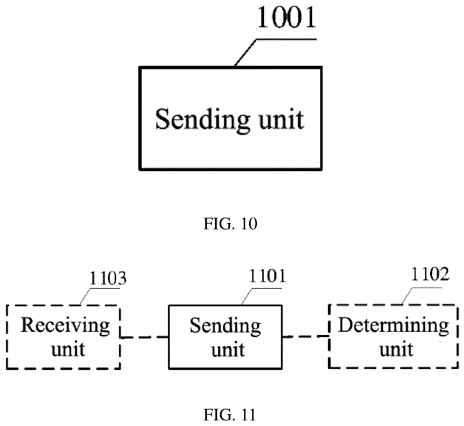

FIG. 10 is a schematic structural diagram of a communication apparatus provided by an embodiment of the present application. As shown in FIG. 10, the communication apparatus includes:
a sending unit 1001, configured to send measurement configuration information; where the measurement configuration information is used to configure a trigger condition for the terminal device to send a measurement report to a first network device, the measurement configuration information includes at least one speed threshold and at least one signal strength threshold, and the measurement report is used for the first network device to determine to perform a CHO or not to perform the CHO.

In an implementation, the measurement configuration information is used to configure a first trigger condition and a second trigger condition that are required to be satisfied for the terminal device to send a measurement report to the first network device, the first trigger condition is a signal condition that is required to be satisfied for the terminal device to send the measurement report, and the second trigger condition is a speed condition that is required to be satisfied for the terminal device to send the measurement report.

In an implementation, the second trigger condition includes at least one of the following: an instantaneous speed of the terminal device exceeds a first speed threshold, an average speed of the terminal device exceeds a second speed threshold, and the terminal device does not obtain a current speed of the terminal device.

In an optional implementation, the first trigger condition includes at least one measurement event defined by a radio resource control protocol (RRC).

In an optional implementation, the measurement configuration information includes at least one of a first threshold and a second threshold, and at least one of the first speed threshold and the second speed threshold.

In an optional implementation, a sending unit 1001 is configured to send first measurement configuration information to the terminal device, where the first measurement configuration information includes at least one of the first threshold and the second threshold.

In an optional implementation, the sending unit 1001 is further configured to send measurement configuration information to the terminal device through a broadcast message or a radio resource control (RRC) signaling, where the measurement configuration information includes at least one of the first speed threshold and the second speed threshold.

In an optional implementation, the sending unit 1001 is further configured to send conditional handover configuration information to the terminal device; where the conditional handover configuration information is used to configure an execution condition for the terminal device to perform a conditional handover and/or configuration information required for performing the conditional handover.

In an optional implementation, the measurement configuration information sent by the first network device to different terminal devices is different.

FIG. 11 is a schematic structural diagram of a communication apparatus provided by an example. As shown in FIG. 11, the communication apparatus includes:
a sending unit 1101, configured to send a measurement report and motion state information of a terminal device; where the measurement report and the motion state information are used for the first network device to determine to perform a CHO or not to perform the CHO.

In an optional implementation, the apparatus further includes:
a determining unit 1102, configured to determine a case that a first trigger condition is satisfied; and the first trigger condition includes at least one measurement event defined by a radio resource control protocol (RRC); and
the sending unit 1101 is specifically configured to send the measurement report and the motion state information to the first network device in the case that the first trigger condition is satisfied.

In an optional implementation, the motion state information includes at least one of an instantaneous speed of the terminal device, an average speed of the terminal device, speed indication information, and motion state indication information; and the speed indication information is used to indicate a speed of the terminal device, and the motion state indication information is used to indicate a motion state of the terminal device.

In an optional implementation, the communication apparatus further includes:
a receiving unit 1103, configured to receive conditional handover configuration information from the first network device; where the conditional handover configuration information is used to configure a performing condition for the terminal device to perform a conditional handover and/or configuration information required to perform the conditional handover.

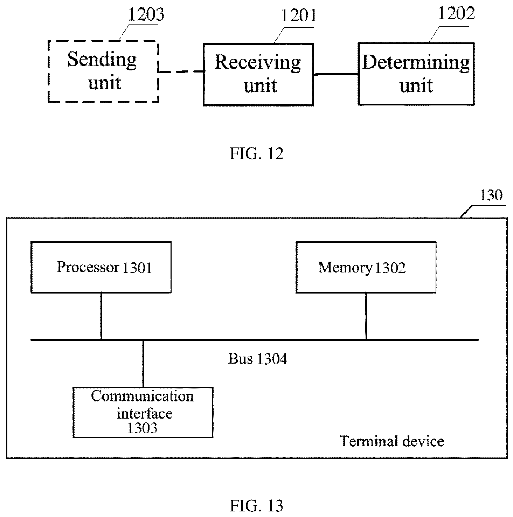

FIG. 12 is a schematic structural diagram of a communication apparatus provided by an example of the present application. As shown in FIG. 12, the communication apparatus includes:
a receiving unit 1201, configured to receive a measurement report and motion state information of a terminal device from the terminal device; and
a determining unit 1202, configured to determine to perform a CHO or not to perform the CHO according to the measurement report and the motion state information.

In an optional implementation, the motion state information includes at least one of an instantaneous speed of the terminal device, an average speed of the terminal device, speed indication information, and motion state indication information; and the speed indication information is used to indicate a speed of the terminal device, and the motion state indication information is used to indicate a motion state of the terminal device.

In an optional implementation, the communication apparatus further includes:
a sending unit 1203, configured to send conditional handover configuration information to the terminal device; where the conditional handover configuration information is used to configure a performing condition for the terminal device to perform a conditional handover and/or configuration information required to perform the conditional handover.

It should be understood that a division of each unit of the communication apparatuses in FIG. 9 to FIG. 12 is only a division of logical functions, and may be fully or partially integrated into one physical entity in actual implementation, or may be physically separated. For example, the above units can be separately disposed processing elements, or can be integrated into a certain chip of a terminal for implementation. In addition, they can also be stored in a storage element of a controller in a form of program codes and are called by a certain processing element of the processor to execute the functions of the above units. In addition, various units can be integrated together or implemented separately. The processing element here can be an integrated circuit chip with signal processing capabilities. In an implementation process, each step of the above method or each of the above units can be completed by an integrated logic circuit of hardware in the processor element or instructions in a form of software. The processing element may be a general-purpose processor, such as a network processor or a central processing unit (CPU for short), or one or more integrated circuits configured to implement the above methods, such as one or multiple application-specific integrated circuits (ASIC for short), or, one or multiple microprocessors (English: digital signal processor, DSP for short), or, one or multiple field-programmable gate arrays (FPGA for short), etc.

FIG. 13 is a schematic structural diagram of a terminal device provided by an embodiment of the present application. As shown in FIG. 13, the terminal device 130 includes a processor 1301, a memory 1302, and a communication interface 1303; the processor 1301, the memory 1302, and the communication interface 1303 are connected to each other through a bus.

The memory 1302 includes, but is not limited to, a random access memory (RAM), a read-only memory (ROM), and an erasable programmable read-only memory (EPROM), or a compact disc read-only memory (CDROM). The memory 1302 is used for related instructions and data. The communication interface 1303 is used to receive and send data. The communication interface 1303 can realize a function of the sending unit 902 and a function of the receiving unit 903 in FIG. 9, and can also realize a function of the sending unit 1101 in FIG. 11.

The processor 1301 may adopt a general-purpose central processing unit (Central Processing Unit, CPU), a microprocessor, an application specific integrated circuit (ASIC) or one or more integrated circuits for executing related programs to achieve the method provided in the foregoing embodiment. The processor 1301 may implement a function of the determining unit 901 in FIG. 9, and may also implement a function of the determining unit 1102 in FIG. 11.

The processor 1301 may also be an integrated circuit chip with signal processing capabilities. In an implementation process, each step of the reference signal sending method of the present application can be completed by an integrated logic circuit of hardware in the processor 1301 or instructions in the form of software. The processor 1301 may also be a general-purpose processor, a digital signal processor (Digital Signal Processor, DSP), an application specific integrated circuit (ASIC), a field programmable gate array (FPGA) or other programmable logic devices, a discrete gate or transistor logic devices, and discrete hardware components. Methods, steps, and logical block diagrams disclosed in the embodiments of the present application can be implemented or performed. The general-purpose processor can be a microprocessor or the processor can also be any conventional processor or the like. The steps of the method disclosed in the embodiments of the present application may be directly embodied as being performed and completed by a hardware decoding processor, or performed and completed by a combination of hardware and software modules in a decoding processor. The software module can be located in a mature storage medium in the field, such as random access memory, a flash memory, a read-only memory, a programmable read-only memory or an electrically erasable programmable memory, and a register. The storage medium is located in the memory 1302, and the processor 1301 reads information in the memory 1302, and completes the communication method provided in the embodiment of the present application in combination with its hardware.

The communication interface 1303 uses a transceiving apparatus such as but not limited to a transceiver to implement communication between the terminal device 130 and other devices or a communication network. A bus 1304 may include a path for transferring information between various components of the terminal device 130 (for example, the memory 1302, the processor 1301, and the communication interface 1303).

The processor 1301 in the terminal device 130 is configured to read program codes stored in the memory 1302 to implement the communication method provided in the foregoing embodiment.

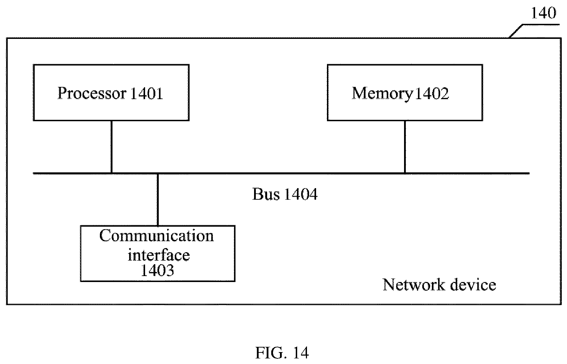

FIG. 14 is a schematic structural diagram of a network device provided by an embodiment of the present application. As shown in FIG. 14, the network device 140 includes a processor 1401, a memory 1402, and a communication interface 1403; and the processor 1401, the memory 1402, and the communication interface 1403 are connected to each other through a bus.

The memory 1402 includes but is not limited to a RAM, a ROM, an EPROM, or a CDROM, and the memory 1402 is used for related instructions and data. The communication interface 1403 is used to receive and send data. The processor 1401 may use a general CPU, a microprocessor, an ASIC, or one or multiple integrated circuits to perform related programs to implement the method provided in the foregoing embodiment. The processor 1401 may implement a function of the determining unit 1202 in FIG. 12.

The communication interface 1403 uses a transceiving apparatus such as but not limited to a transceiver to implement communication between the network device 140 and other devices or a communication network. A bus 1404 may include a path for transferring information between various components of the network device 140 (for example, the memory 1402, the processor 1401, and the communication interface 1403). The communication interface 1403 can realize a function of the sending unit 1001 in FIG. 10 and can also realize a function of the receiving unit 1201 in FIG. 12. In an embodiment of the present invention, a computer-readable storage medium is provided, and the computer-readable storage medium stores a computer program which, when executed by a processor, implement the communication method in the foregoing embodiment.

The above is only specific embodiments of the present invention, but the scope of protection of the present invention is not limited to this. Therefore, the protection scope of the present invention should be subject to the protection scope of the claims.

The foregoing description comprises different examples, which are provided for a better understanding of the invention. The scope of protection of the present application is exclusively defined by the attached claims.

## Claims

1. A communication method, the method comprises:
sending (302), by a terminal device to a first network device, a measurement report in the case that a first trigger condition and a second trigger condition are satisfied; wherein the measurement report is used for the first network device to determine whether to perform a conditional handover, CHO, or not to perform the CHO, the first trigger condition is a signal condition that is required to be satisfied for the terminal device to send the measurement report, and the second trigger condition is a speed condition that is required to be satisfied for the terminal device to send the measurement report, wherein the second trigger condition comprises at least one of the following: an instantaneous speed of the terminal device exceeds a first speed threshold, an average speed of the terminal device exceeds a second speed threshold, or the terminal device does not obtain a current speed of the terminal device.

2. The method according to claim 1, wherein the first trigger condition comprises at least one measurement event defined by a radio resource control, RRC, protocol; and
wherein the method further comprises:
receiving (301), by the terminal device, measurement configuration information from the first network device; wherein the measurement configuration information comprises at least one of the first speed threshold and the second speed threshold.

3. The method according to claim 1 or 2, wherein after sending (302) the measurement report to the first network device, the method further comprises:
receiving (303), by the terminal device, conditional handover configuration information from the first network device; wherein the conditional handover configuration information is used to configure an execution condition for the terminal device to perform a conditional handover and/or configuration information required for performing the conditional handover.

4. A communication method, the method comprises:
sending (401, 501), by a first network device to a terminal device, measurement configuration information; wherein the measurement configuration information is used to configure a first trigger condition and a second trigger condition that are required to be satisfied for the terminal device to send a measurement report to the first network device, wherein the measurement configuration information comprises at least one speed threshold and at least one signal strength threshold, and the measurement report is used for the first network device to determine whether to perform a conditional handover, CHO, or not to perform the CHO, wherein the first trigger condition is a signal condition that is required to be satisfied for the terminal device to send the measurement report, and the second trigger condition comprises at least one of the following: an instantaneous speed of the terminal device exceeds a first speed threshold, an average speed of the terminal device exceeds a second speed threshold, or the terminal device does not obtain a current speed of the terminal device.

5. The method according to claim 4,
wherein the first trigger condition comprises at least one measurement event defined by a radio resource control, RRC, protocol.

6. The method according to claim 5, wherein the measurement configuration information comprises at least one of the first speed threshold and the second speed threshold; and
wherein the method further comprises:
sending, by the first network device, the measurement configuration information to the terminal device through a broadcast message or a RRC signaling.

7. The method according to any one of claims 4 to 6, wherein after the first network device sends (401, 501) the measurement configuration information to the terminal device, the method further comprises:
sending (505), by the first network device, conditional handover configuration information to the terminal device; wherein the conditional handover configuration information is used to configure an execution condition for the terminal device to perform a conditional handover and/or configuration information required for performing the conditional handover; and
the measurement configuration information sent by the first network device to different terminal devices are different.

8. A terminal device comprising
a determining unit (901), configured to determine a case that a first trigger condition and a second trigger condition are satisfied; and
a sending unit (902), configured to send a measurement report to a first network device; wherein the measurement report is used for the first network device to determine whether to perform a conditional handover, CHO, or not to perform the CHO, the first trigger condition comprises that the terminal device detects a signal strength from the first network device is less than a first threshold, and/or the terminal device detects a signal strength from a second network device is not less than a second threshold, and the second trigger condition comprises at least one of the following: an instantaneous speed of the terminal device exceeds a first speed threshold, an average speed of the terminal device exceeds a second speed threshold, or the terminal device does not obtain a current speed of the terminal device.

9. The terminal device according to claim 8, wherein the terminal device further comprises:
a receiving unit (903), configured to receive measurement configuration information from the first network device; wherein the measurement configuration information comprises at least one of the first speed threshold and the second speed threshold.

10. The terminal device according to claim 8 or 9, wherein the terminal device further comprises:
a receiving unit (903), configured to receive conditional handover configuration information from the first network device; wherein the conditional handover configuration information is used to configure an execution condition for the terminal device to perform a conditional handover and/or configuration information required for performing the conditional handover.

11. A first network device comprising a sending unit (1001), configured to send measurement configuration information to a terminal device; wherein the measurement configuration information is used to configure a first trigger condition and a second trigger condition that are required to be satisfied for a terminal device to send a measurement report to the first network device, wherein the measurement configuration information comprises at least one speed threshold and at least one signal strength threshold, and the measurement report is used for the first network device to determine whether to perform a conditional handover, CHO, or not to perform the CHO, wherein the first trigger condition is a signal condition that is required to be satisfied for the terminal device to send the measurement report, and the second trigger condition comprises at least one of the following: an instantaneous speed of the terminal device exceeds a first speed threshold, an average speed of the terminal device exceeds a second speed threshold, or the terminal device does not obtain a current speed of the terminal device.

12. The first network device according to claim 11, wherein the first trigger condition comprises at least one measurement event defined by a radio resource control, RRC, protocol.

13. The first network device according to claim 11 or 12, wherein the sending unit (1001) is further configured to send the measurement configuration information to the terminal device through a broadcast message or a RRC signaling, wherein the measurement configuration information comprises at least one of the first speed threshold and the second speed threshold.

14. A communication apparatus, **characterized in that** the communication apparatus comprises a memory and a processor; wherein the memory is configured to store a program; and the processor is configured to execute the program stored in the memory, when the processor and the memory are comprised in a terminal device, and the program is executed, the processor is configured to execute the method according to any one of claims 1 to 3, or when the processor and the memory are comprised in a first network device, and the program is executed, the processor is configured to execute the method according to any one of claims 4 to 7.

15. A computer readable storage medium, **characterized in that** the computer readable storage medium stores a computer program, and the computer program comprises program instructions which, when executed by a processor comprised in a terminal device, enable the processor to execute the method according to any one of claims 1 to 3, or which, when executed by a processor comprised in a first network device, enable the processor to execute the method according to any one of claims 4 to 7.

## Patentansprüche

1. Kommunikationsverfahren, das Verfahren Folgendes umfassend:
Senden (302) eines Messberichts durch ein Endgerät an ein erstes Netzwerkgerät in dem Fall, dass eine erste Triggerbedingung und eine zweite Triggerbedingung erfüllt sind; wobei der Messbericht für P an das erste Netzwerkgerät verwendet wird, um zu bestimmen, ob eine bedingte Übergabe, CHO, durchgeführt werden soll oder die CHO nicht durchgeführt werden soll, die erste Triggerbedingung eine Signalbedingung ist, die erfüllt werden muss, damit das Endgerät den Messbericht sendet, und die zweite Triggerbedingung eine Geschwindigkeitsbedingung ist, die erfüllt werden muss, damit das Endgerät den Messbericht sendet, wobei die zweite Triggerbedingung mindestens eines der folgenden umfasst: Eine momentane Geschwindigkeit des Endgeräts überschreitet einen ersten Geschwindigkeitsschwellenwert, eine durchschnittliche Geschwindigkeit des Endgeräts überschreitet einen zweiten Geschwindigkeitsschwellenwert, oder das Endgerät erreicht keine aktuelle Geschwindigkeit des Endgeräts.

2. Verfahren nach Anspruch 1, wobei die erste Triggerbedingung mindestens ein Messereignis umfasst, das durch ein Funkressourcensteuerungs-Protokoll (RRC-Protokoll) definiert ist; und wobei das Verfahren ferner Folgendes umfasst:
Empfangen (301) von Messkonfigurationsinformationen von dem ersten Netzwerkgerät durch das Endgerät; wobei die Messkonfigurationsinformationen mindestens eines aus dem ersten Geschwindigkeitsschwellenwert und dem zweiten Geschwindigkeitsschwellenwert umfassen.

3. Verfahren nach Anspruch 1 oder 2, wobei das Verfahren nach dem Senden (302) des Messberichts an das erste Netzwerkgerät ferner Folgendes umfasst:
Empfangen (303) von bedingten Übergabekonfigurationsinformationen von dem ersten Netzwerkgerät durch das Endgerät; wobei die bedingten Übergabekonfigurationsinformationen verwendet werden, um eine Ausführungsbedingung für das Endgerät zu konfigurieren, um eine bedingte Übergabe und/oder Konfigurationsinformationen durchzuführen, die zum Durchführen der bedingten Übergabe erforderlich sind.

4. Kommunikationsverfahren, das Verfahren Folgendes umfassend:
Senden (401, 501) von Messkonfigurationsinformationen durch ein erstes Netzwerkgerät an ein Endgerät; wobei die Messkonfigurationsinformationen verwendet werden, um eine erste Triggerbedingung und eine zweite Triggerbedingung zu konfigurieren, die erfüllt werden müssen, damit das Endgerät einen Messbericht an das erste Netzwerkgerät sendet, wobei die Messkonfigurationsinformationen mindestens einen Geschwindigkeitsschwellenwert und mindestens einen Signalstärkeschwellenwert umfassen, und der Messbericht für das erste Netzwerkgerät verwendet wird, um zu bestimmen, ob eine bedingte Übergabe, CHO, durchgeführt werden soll oder die CHO nicht durchgeführt werden soll, wobei die erste Triggerbedingung eine Signalbedingung ist, die erfüllt sein muss, damit das Endgerät den Messbericht sendet, und die zweite Triggerbedingung mindestens eines der folgenden umfasst: Eine momentane Geschwindigkeit des Endgeräts überschreitet einen ersten Geschwindigkeitsschwellenwert, eine durchschnittliche Geschwindigkeit des Endgeräts überschreitet einen zweiten Geschwindigkeitsschwellenwert, oder das Endgerät erreicht keine aktuelle Geschwindigkeit des Endgerätes.

5. Verfahren nach Anspruch 4, wobei die erste Triggerbedingung mindestens ein Messereignis umfasst, das durch ein Funkressourcensteuerungsprotokoll (RRC-Protokoll) definiert ist.

6. Verfahren nach Anspruch 5, wobei die Messkonfigurationsinformationen mindestens eines aus dem ersten Geschwindigkeitsschwellenwert und dem zweiten Geschwindigkeitsschwellenwert umfassen; und
wobei das Verfahren ferner Folgendes umfasst:
Senden der Messkonfigurationsinformationen durch das erste Netzwerkgerät an das Endgerät über eine Broadcast-Nachricht oder eine RRC-Signalisierung.

7. Verfahren nach einem der Ansprüche 4 bis 6, wobei das Verfahren nach dem Senden (401, 501) der Messkonfigurationsinformationen durch das erste Netzwerkgerät an das Endgerät ferner Folgendes umfasst:
Senden (505) von bedingten Übergabekonfigurationsinformationen durch das erste Netzwerkgerät an das Endgerät; wobei die bedingten Übergabekonfigurationsinformationen verwendet werden, um eine Ausführungsbedingung für das Endgerät zu konfigurieren, um eine bedingte Übergabe und/oder Konfigurationsinformationen durchzuführen, die zum Durchführen der bedingten Übergabe erforderlich sind; und
die Messkonfigurationsinformationen, die von dem ersten Netzwerkgerät an verschiedene Endgeräte gesendet werden, unterschiedlich sind.

8. Endgerät, umfassend:
Eine Bestimmungseinheit (901), die konfiguriert ist, einen Fall zu bestimmen, dass eine erste Triggerbedingung und eine zweite Triggerbedingung erfüllt sind; und
eine Sendeeinheit (902), die dazu konfiguriert ist, einen Messbericht an ein erstes Netzwerkgerät zu senden; wobei der Messbericht für das erste Netzwerkgerät verwendet wird, um zu bestimmen, ob eine bedingte Übergabe, CHO, durchgeführt werden soll oder die CHO nicht durchgeführt werden soll, die erste Triggerbedingung umfasst, dass das Endgerät erfasst, dass eine Signalstärke von dem ersten Netzwerkgerät kleiner als ein erster Schwellenwert ist, und/oder das Endgerät erfasst, dass eine Signalstärke von einem zweiten Netzwerkgerät nicht kleiner als ein zweiter Schwellenwert ist, und die zweite Triggerbedingung mindestens eines der Folgenden umfasst: Eine momentane Geschwindigkeit des Endgeräts überschreitet einen ersten Geschwindigkeitsschwellenwert, eine durchschnittliche Geschwindigkeit des Endgeräts überschreitet einen zweiten Geschwindigkeitsschwellenwert, oder das Endgerät erreicht keine aktuelle Geschwindigkeit des Endgeräts.

9. Endgerät nach Anspruch 8, wobei das Endgerät ferner Folgendes umfasst:
Empfangseinheit (903), die konfiguriert ist, Messkonfigurationsinformationen von dem ersten Netzwerkgerät zu empfangen; wobei die Messkonfigurationsinformationen den ersten Geschwindigkeitsschwellenwert und/oder den zweiten Geschwindigkeitsschwellenwert umfassen.

10. Endgerät nach Anspruch 8 oder 9, wobei das Endgerät Folgendes umfasst:
Eine Empfangseinheit (903), die konfiguriert ist, bedingte Übergabekonfigurationsinformationen von dem ersten Netzwerkgerät zu empfangen; wobei die bedingte Übergabekonfigurationsinformationen verwendet werden, um eine Ausführungsbedingung für das Endgerät zu konfigurieren, um eine bedingte Übergabe und/oder Konfigurationsinformationen durchzuführen, die zum Durchführen der bedingten Übergabe erforderlich sind.

11. Erstes Netzwerkgerät, umfassend
eine Sendeeinheit (1001), die konfiguriert ist, Messkonfigurationsinformationen an ein Endgerät zu senden; wobei die Messkonfigurationsinformationen verwendet werden, um eine erste Triggerbedingung und eine zweite Triggerbedingung zu konfigurieren, die erfüllt sein müssen, damit ein Endgerät einen Messbericht an das erste Netzwerkgerät sendet, wobei die Messkonfigurationsinformationen mindestens einen Geschwindigkeitsschwellenwert und mindestens einen Signalstärkeschwellenwert umfassen, und der Messbericht für das erste Netzwerkgerät verwendet wird, um zu bestimmen, ob eine bedingte Übergabe, CHO, durchgeführt werden soll oder die CHO nicht durchgeführt werden soll, wobei die erste Triggerbedingung eine Signalbedingung ist, die erfüllt sein muss, damit das Endgerät den Messbericht sendet, und die zweite Triggerbedingung mindestens eines der Folgenden umfasst: Eine momentane Geschwindigkeit des Endgeräts überschreitet einen ersten Geschwindigkeitsschwellenwert, eine durchschnittliche Geschwindigkeit des Endgeräts überschreitet einen zweiten Geschwindigkeitsschwellenwert, oder das Endgerät erreicht keine aktuelle Geschwindigkeit des Endgeräts.

12. Erstes Netzwerkgerät nach Anspruch 11, wobei die erste Triggerbedingung mindestens ein Messereignis umfasst, das durch ein Funkressourcensteuer-Protokoll (RRC-Protokoll) definiert ist.

13. Erstes Netzwerkgerät nach Anspruch 11 oder 12, wobei die Sendeeinheit (1001) ferner dazu konfiguriert ist, die Messkonfigurationsinformationen durch eine Broadcast-Nachricht oder eine RRC-Signalisierung an das Endgerät zu senden, wobei die Messkonfigurationsinformationen mindestens eines aus dem ersten Geschwindigkeitsschwellenwert und dem zweiten Geschwindigkeitsschwellenwert umfassen.

14. Kommunikationsvorrichtung, **dadurch gekennzeichnet, dass** die Kommunikationsvorrichtung einen Speicher und einen Prozessor umfasst; wobei der Speicher konfiguriert ist, ein Programm zu speichern; und der Prozessor konfiguriert ist, das in dem Speicher gespeicherte Programm auszuführen, wenn der Prozessor und der Speicher in einem Endgerät enthalten sind und das Programm ausgeführt wird, der Prozessor konfiguriert ist, das Verfahren nach einem der Ansprüche 1 bis 3 auszuführen, oder wenn der Prozessor und der Speicher in einem ersten Netzwerkgerät enthalten sind und das Programm ausgeführt wird, der Prozessor konfiguriert ist, das Verfahren nach einem der Ansprüche 4 bis 7 auszuführen.

15. Computerlesbares Speichermedium, **dadurch gekennzeichnet, dass** das computerlesbare Speichermedium ein Computerprogramm speichert und das Computerprogramm Programmanweisungen umfasst, die, wenn sie von einem Prozessor ausgeführt werden, der in einem Endgerät enthalten ist, es dem Prozessor ermöglichen, das Verfahren nach einem der Ansprüche 1 bis 3 auszuführen, oder die, wenn sie von einem Prozessor ausgeführt werden, der in einem ersten Netzwerkgerät enthalten ist, es dem Prozessor ermöglichen, das Verfahren nach einem der Ansprüche 4 bis 7 auszuführen.

## Revendications

1. Un procédé de communication, le procédé comprenant les étapes consistant à :
envoyer (302), par un dispositif terminal à un premier dispositif de réseau, un rapport de mesure dans le cas où une première condition de déclenchement et une seconde condition de déclenchement sont satisfaites, dans lequel le rapport de mesure est utilisé pour P, le premier dispositif de réseau, pour déterminer s'il faut effectuer un transfert conditionnel, CHO, ou ne pas effectuer le CHO, la première condition de déclenchement est une condition de signal qui doit être satisfaite pour que le dispositif terminal envoie le rapport de mesure, et la seconde condition de déclenchement est une condition de vitesse qui doit être satisfaite pour que le dispositif terminal envoie le rapport de mesure, dans lequel la seconde condition de déclenchement comprend au moins l'un des éléments suivants : une vitesse instantanée du dispositif terminal dépasse un premier seuil de vitesse, une vitesse moyenne du dispositif terminal dépasse un second seuil de vitesse, ou le dispositif terminal n'obtient pas une vitesse habituelle du dispositif terminal.

2. Le procédé selon la revendication 1, dans lequel la première condition de déclenchement comprend au moins un événement de mesure défini par un protocole de contrôle de ressources radio, RRC, et dans lequel le procédé comprend en outre :
la réception (301), par le dispositif terminal, des informations de configuration de mesure à partir du premier dispositif de réseau, dans lequel les informations de configuration de mesure comprennent au moins l'un du premier seuil de vitesse et le second seuil de vitesse.

3. Le procédé selon la revendication 1 ou 2, dans lequel, après l'envoi (302) du rapport de mesure au premier dispositif de réseau, le procédé comprend en outre :
la réception (303), par le dispositif terminal, des informations de configuration de transfert conditionnel à partir du premier dispositif de réseau, dans lequel les informations de configuration de transfert conditionnel sont utilisées pour configurer une condition d'exécution pour que le dispositif terminal effectue un transfert conditionnel et/ou des informations de configuration requises pour effectuer le transfert conditionnel.

4. Un procédé de communication, le procédé comprend : l'envoi (401, 501), par un premier dispositif de réseau à un dispositif terminal, d' informations de configuration de mesure, dans lequel les informations de configuration de mesure sont utilisées pour configurer une première condition de déclenchement et une seconde condition de déclenchement qui doivent être satisfaites pour que le dispositif terminal envoie un rapport de mesure au premier dispositif de réseau, dans lequel les informations de configuration de mesure comprennent au moins un seuil de vitesse et au moins un seuil d'intensité de signal, et dans lequel le rapport de mesure est utilisé pour le premier dispositif de réseau afin de déterminer s'il faut effectuer un transfert conditionnel, CHO, ou ne pas effectuer le CHO, dans lequel la première condition de déclenchement est une condition de signal qui doit être satisfaite pour que le dispositif terminal envoie le rapport de mesure, et la seconde condition de déclenchement comprend au moins l'un des éléments suivants : une vitesse instantanée du dispositif terminal dépasse un premier seuil de vitesse, une vitesse moyenne du dispositif terminal dépasse un second seuil de vitesse, ou le dispositif terminal n'obtient pas une vitesse habituelle du dispositif terminal.

5. Le procédé selon la revendication 4, dans lequel la première condition de déclenchement comprend au moins un événement de mesure défini par un protocole de commande de ressources radio, RRC.

6. Le procédé selon la revendication 5, dans lequel les informations de configuration de mesure comprennent au moins l'un du premier seuil de vitesse et du second seuil de vitesse, et dans lequel le procédé comprend en outre :
l'envoi, par le premier dispositif de réseau, des informations de configuration de mesure au dispositif terminal par le biais d'un message de diffusion ou d'une signalisation RRC.

7. Le procédé selon l'une quelconque des revendications 4 à 6, dans lequel, après que le premier dispositif de réseau a envoyé (401, 501) les informations de configuration de mesure au dispositif terminal, le procédé comprend en outre :
l'envoi (505), par le premier dispositif de réseau, des informations de configuration de transfert conditionnel au dispositif de terminal, dans lequel les informations de configuration de transfert conditionnel sont utilisées pour configurer une condition d'exécution pour que le dispositif terminal effectue un transfert conditionnel et/ou des informations de configuration requises pour effectuer le transfert conditionnel, et
les informations de configuration de mesure envoyées par le premier dispositif de réseau à différents dispositifs terminaux sont différentes.

8. Un dispositif terminal comprenant :
une unité de détermination (901), configurée pour déterminer un cas où une première condition de déclenchement et une seconde condition de déclenchement sont satisfaites, et
une unité d'envoi (902), configurée pour envoyer un rapport de mesure à un premier dispositif de réseau, dans lequel le rapport de mesure est utilisé pour le premier dispositif de réseau pour déterminer s'il faut effectuer un transfert conditionnel, CHO, ou ne pas effectuer le CHO, la première condition de déclenchement comprend que le dispositif terminal détecte une intensité de signal provenant du premier dispositif de réseau est inférieure à un premier seuil, et/ou le dispositif terminal détecte une intensité de signal provenant d'un second dispositif de réseau n'est pas inférieure à un second seuil, et la seconde condition de déclenchement comprend au moins l'un des éléments suivants : une vitesse instantanée du dispositif terminal dépasse un premier seuil de vitesse, une vitesse moyenne du dispositif de terminal dépasse un second seuil de vitesse, ou le dispositif terminal n'obtient pas une vitesse habituelle du dispositif terminal.

9. Le dispositif électronique selon la revendication 8, dans lequel le dispositif terminal comprend en outre :
une unité de réception (903), configurée pour recevoir des informations de configuration de mesure à partir du premier dispositif de réseau, dans lequel les informations de configuration de mesure comprennent au moins l'un du premier seuil de vitesse et le second seuil de vitesse.

10. Le dispositif électronique selon la revendication 9, dans lequel le dispositif terminal comprend :
une unité de réception (903), configurée pour recevoir des informations de configuration de transfert conditionnel en provenance du premier dispositif de réseau, dans lequel les informations de configuration de transfert conditionnel sont utilisées pour configurer une condition d'exécution pour que le dispositif terminal effectue un transfert conditionnel et/ou des informations de configuration requises pour effectuer le transfert conditionnel.

11. Un premier dispositif de réseau comprenant
une unité d'envoi (1001), configurée pour envoyer des informations de configuration de mesure à un dispositif terminal ; dans lequel les informations de configuration de mesure sont utilisées pour configurer une première condition de déclenchement et une seconde condition de déclenchement qui doivent être satisfaites pour qu'un dispositif terminal envoie un rapport de mesure au premier dispositif de réseau, dans lequel les informations de configuration de mesure comprennent au moins un seuil de vitesse et au moins un seuil d'intensité de signal, et le rapport de mesure est utilisé pour que le premier dispositif de réseau détermine s'il faut effectuer un transfert conditionnel, CHO, ou ne pas effectuer le CHO, dans lequel la première condition de déclenchement est une condition de signal qui doit être satisfaite pour que le dispositif terminal envoie le rapport de mesure, et la seconde condition de déclenchement comprend au moins l'un des éléments suivants : une vitesse instantanée du dispositif terminal dépasse un premier seuil de vitesse, une vitesse moyenne du dispositif terminal dépasse un second seuil de vitesse, ou le dispositif terminal n'obtient pas une vitesse habituelle du dispositif terminal.

12. Le premier dispositif de réseau selon la revendication 11, dans lequel la première condition de déclenchement comprend au moins un événement de mesure défini par un protocole de commande de ressources radio, RRC.

13. Le premier dispositif de réseau selon la revendication 11 ou 12, dans lequel l'unité d'envoi (1001) est en outre configurée pour envoyer les informations de configuration de mesure au dispositif terminal par l'intermédiaire d'un message de diffusion ou d'une signalisation RRC, dans lequel les informations de configuration de mesure comprennent au moins l'un du premier seuil de vitesse et le second seuil de vitesse.

14. Un appareil de communication, **caractérisé en ce que** l'appareil de communication comprend une mémoire et un processeur, dans lequel la mémoire est configurée pour stocker un programme, et le processeur est configuré pour exécuter le programme stocké dans la mémoire, lorsque le processeur et la mémoire sont compris dans un dispositif terminal, et que le programme est exécuté ; le processeur est configuré pour exécuter le procédé selon l'une quelconque des revendications 1 à 3, ou lorsque le processeur et la mémoire sont compris dans un premier dispositif réseau, et que le programme est exécuté ; le processeur est configuré pour exécuter le procédé selon l'une quelconque des revendications 4 à 7.

15. Un support de stockage lisible par ordinateur, **caractérisé en ce que** le support de stockage lisible par ordinateur stocke un programme informatique, et le programme informatique comprend des instructions de programme qui, lorsqu'elles sont exécutées par un processeur compris dans un dispositif terminal, permettent au processeur d'exécuter le procédé selon l'une quelconque des revendications 1 à 3, ou qui, lorsqu'elles sont exécutées par un processeur compris dans un premier dispositif réseau, permettent au processeur d'exécuter le procédé selon l'une quelconque des revendications 4 à 7.
